Europäisches Patentamt

European Patent Office

Office européen des brevets

(19)

(11) EP 1 248 076 A1

(12) **EUROPÄISCHE PATENTANMELDUNG**

(43) Veröffentlichungstag:
09.10.2002 Patentblatt 2002/41

(51) Int Cl.⁷: $G01D\ 5/20$, $G01B\ 7/00$

(21) Anmeldenummer: 01202920.3

(22) Anmeldetag: 30.07.2001

(84) Benannte Vertragsstaaten:
AT BE CH CY DE DK ES FI FR GB GR IE IT LI LU
MC NL PT SE TR
Benannte Erstreckungsstaaten:
AL LT LV MK RO SI

(71) Anmelder: Esec Trading S.A.
6330 Cham (CH)

(72) Erfinder:
• Mannhart, Eugen
6330 Cham (CH)
• Schmid, Reto
6300 Zug (CH)

(74) Vertreter: Falk, Urs, Dr.
Patentanwaltsbüro Dr. Urs Falk,
Eichholzweg 9A
6312 Steinhausen (CH)

(54) **Induktiver Sensor für die Positionserfassung eines metallischen Werkstücks**

(57) Zur Bestimmung der Lage eines metallischen Werkstücks (2) wird ein induktiver Sensor (1) eingesetzt. Als induktiver Sensor dient vorzugsweise eine einzige Flachspule (4), die den über ihre Fläche gemittelten Abstand zur Oberfläche des Werkstücks misst. Der induktive Sensor kann aber auch mehrere Flachspulen umfassen. Der induktive Sensor misst die Position des Werkstücks anhand seiner Kontur, beispielsweise anhand eines Loches oder anhand einer Kante.

Die Erfindung ist besonders geeignet für die Verwendung bei einem Transportsystem, wo der induktive Sensor zusammen mit einem Regler (12) die Position des Werkstücks regeln kann.

**Fig. 2**

EP 1 248 076 A1

**Beschreibung**

Die Erfindung betrifft einen induktiven Sensor für die Positionserfassung eines metallischen Werkstücks. Unter einem metallischen Werkstück ist auch ein Werkstück aus einem nicht metallischen Material zu verstehen, wenn dessen Oberfläche mindestens teilweise metallisiert ist.

Ein solcher induktiver Sensor eignet sich z.B. für den Einsatz auf einer Vorrichtung für die Montage von Halbleiterchips, wie sie allgemein als Die Bonder bekannt sind. Bei der Montage der Halbleiterchips wird das Substrat von der Transporteinrichtung taktweise einer Dispensstation, wo Klebstoff oder Lot aufgetragen wird, und dann einer Bondstation zugeführt, wo der nächste Halbleiterchip plaziert wird. Aus dem europäischen Patent EP 330831 und dem schweizerischen Patent CH 689188 sind Transporteinrichtungen bekannt geworden, bei denen die Ausrichtung des Substrates quer zur Transportrichtung auf mechanische Weise erfolgt, indem das Substrat gegen einen Anschlag gezogen wird. Während des Vorschubs des Substrats wird dessen Position anhand seiner Löcher mittels eines optischen Sensors erfasst und zur Steuerung des Transportsystems verwendet. Andererseits sind Montageautomaten im Handel, bei denen die Lage des Substrats unmittelbar vor dem Plazieren des nächsten Halbleiterchips mittels einer Kamera und elektronischer Bildverarbeitung bestimmt und auskorrigiert wird. Eine solche Lösung ist bekannt aus der europäischen Patentanmeldung EP 877544. Diese Lösung hat zwei erhebliche Nachteile: Sie ist zeitintensiv, was auf Kosten der Zykluszeit geht, und teuer. Von Montageautomaten werden aber hohe Plazierungsgenauigkeit und kurze Zykluszeiten verlangt.

Bei Montageautomaten, die den Halbleiterchip auf das Substrat auflöten, wird das Substrat auf eine relativ hohe Temperatur von bis zu 450° aufgeheizt. Der Vorschub des Substrats in Transportrichtung erfolgt deshalb über Stifte, die in Zentrierlöcher des metallischen Substrats eingreifen. Die Positionierung des Substrats mittels solcher Stifte ist relativ ungenau und genügt den heutigen Anforderungen nicht mehr. Optische Sensoren können bei den hohen Temperaturen nicht eingesetzt werden, zudem sind sie verschmutzungsanfällig.

Der Erfindung liegt die Aufgabe zugrunde, einen Sensor für die Positionserfassung eines metallischen Werkstücks zu entwickeln, der eine zuverlässige, genaue Positionierung metallischer Werkstücke auch bei hohen Arbeitstemperaturen ermöglicht.

Die Erfindung besteht in den im Anspruch 1 angegebenen Merkmalen. Vorteilhafte Ausgestaltungen ergeben sich aus den abhängigen Ansprüchen.

Zur Bestimmung der Lage des metallischen Werkstücks wird erfindungsgemäss ein induktiver Sensor eingesetzt. Die Erfindung macht dabei Gebrauch von der induktiven Abstandsmessung, bei der der ohmsche Widerstand und/oder die Induktivität einer mit einem Wechselstrom beaufschlagten Spule ändert, wenn ein metallischer Gegenstand in ihrem magnetischen Nahfeld bewegt wird. Bei der Erfindung wird das Werkstück unter dem induktiven Sensor hindurchtransportiert. Als induktiver Sensor dient vorzugsweise eine einzige Flachspule, die den über ihre Fläche gemittelten Abstand zur Oberfläche des Werkstücks misst. Der induktive Sensor kann aber auch mehrere Flachspulen umfassen. Der induktive Sensor ist speziell dadurch gekennzeichnet, dass die Flachspule bzw., im Fall von mehreren Flachspulen, jede seiner Flachspulen gleichzeitig als Erreger- wie als Empfängerspule dient. D.h. jede Flachspule misst für sich allein, vollkommen unabhängig von den anderen Flachspulen.

Für die Lageerfassung und Positionierung werden Konturen, Vertiefungen oder Bohrungen des Werkstücks benutzt, die vom induktiven Sensor erfasst und dann ausgewertet werden.

Nachfolgend werden Ausführungsbeispiele der Erfindung anhand der Zeichnung näher erläutert.

Es zeigen:

Fig. 1 in Aufsicht einen induktiven Sensor für die Positionserfassung eines von einem Transportsystem transportierten metallischen Werkstücks,

Fig. 2 eine Flachspule und ein Loch eines Werkstücks,

Fig. 3 das Ausgangssignal der Flachspule,

Fig. 4 die Flachspule und ein Loch eines Werkstücks,

Fig. 5 das Ausgangssignal der Flachspule,

Fig. 6 eine Steuereinrichtung für den Antrieb des Transportsystems,

Fig. 7 einen induktiven Sensor mit vier Flachspulen,

Fig. 8 einen induktiven Sensor mit zwei Flachspulen zur Messung der Drehlage des Werkstücks, und

Fig. 9 den induktiven Sensor im Querschnitt.

Ausführungsbeispiel 1

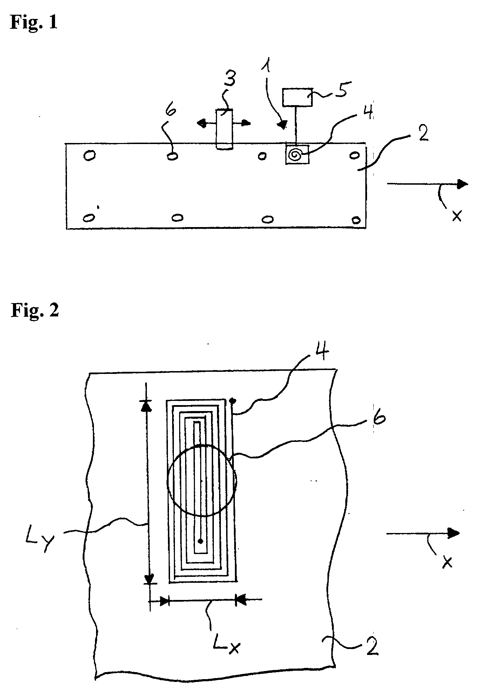

Das erste, anhand der Fig. 1 erläuterte Ausführungsbeispiel betrifft einen induktiven Sensor 1, der sich für die Positionserfassung eines metallischen Werkstücks 2 eignet. Das Werkstück 2 wird von einem Transportsystem 3 in einer horizontalen Transportrichtung x transportiert. Das Werkstück 2 ist beispielsweise ein metallisches Leadframe oder ein mit einer mindestens teilweise metallisierten Oberfläche versehenes Substrat, auf dem ein Halbleiterchip montiert werden soll. Das Werkstück 2 wird taktweise vorgeschoben. Der induktive Sensor 1 dient dazu, unmittelbar nach Abschluss einer Transportphase die Lage des Werkstücks 2 bezüglich der Transportrichtung x zu bestimmen. Der induktive Sensor 1 besteht aus einer ortsfest angeordneten Flachspule 4, mit der eine im Werkstück 2 vorhandene Kontur, Vertiefung oder Bohrung erfasst wird. Das Signal der Flachspule 4 wird von einer elektronischen Auswerteeinheit 5, z.B. einem Mikroprozessor, ausgewertet.

Im Beispiel ist das Werkstück 2 ein metallisches Leadframe, dessen Längskanten Löcher 6 aufweisen. Die Details des Leadframes sind nicht dargestellt. Die Fig. 2 zeigt ein Beispiel, wie die Flachspule 4 und die Geometrie der Löcher 6 des Werkstücks 2 aufeinander abgestimmt sind. Die Windungen der Flachspule 4 sind rechteckförmig gewickelt. Die Abmessung $L_X$ der Flachspule 4 in Transportrichtung x ist etwa so gross wie der Durchmesser der Löcher 6, die Abmessung $L_Y$ der Flachspule 4 quer zur Transportrichtung x, d.h. in y-Richtung, ist grösser als der Durchmesser der Löcher 6. Das Ausgangssignal der Flachspule 4 hängt somit nur von der x-Lage des Loches 6, nicht aber von der y-Lage des Loches 6 ab. Die Länge $L_Y$ ist so gewählt, dass das Ausgangssignal der Flachspule 4 bei der kleinsten wie bei der grössten möglichen y-Lage des Loches 6 gleich gross ist. Die Flachspule 4 ist so positioniert, dass sie die x-Lage des Loches 6 erfassen kann, sobald der Transport des Leadframes beendet ist.

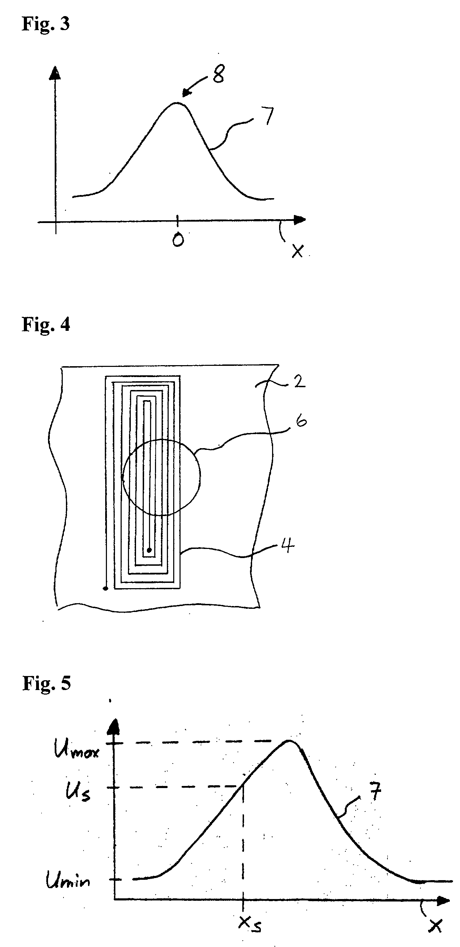

Die Fig. 3 zeigt das Ausgangssignal 7 der Flachspule 4 in Abhängigkeit der x-Lage des Loches 6, wobei der Wert x=0 die in der Fig. 2 dargestellte Lage kennzeichnet, in der die Flachspule 4 in Transportrichtung x über dem Loch 6 zentriert ist. Das Ausgangssignal 7 weist ein Extremum 8 auf, wenn das Loch 6 in Transportrichtung x über der Flachspule 4 zentriert ist. Damit die x-Lage des Loches 6 eindeutig bestimmt werden kann, müssen sowohl der Wert des Ausgangssignals 7 als auch dessen Ableitung bekannt sein. Das Ausgangssignal 7 der Flachspule 4 wird deshalb während des Transports des Leadframes der elektronischen Auswerteeinheit 5 zugeführt, die beim Stillstand des Leadframes den Wert des Ausgangssignals 7 und aus dem zeitlichen Verlauf des Ausgangssignals 7 vor dem Stillstand des Leadframes den Wert der Ableitung bestimmt. Ein allfälliger Lagefehler des Leadframes in x-Richtung kann entweder durch eine Korrekturbewegung des Transportsystems 3 oder durch eine Korrekturbewegung des Pick and Place Systems, das den Halbleiterchip auf dem Leadframe plaziert, kompensiert werden.

Anstelle der rechteckförmigen Flachspule 4 kann auch eine Flachspule verwendet werden, deren Windungen eine andere Geometrie aufweisen. So können s die Windungen z.B. kreisförmig gewickelt sein.

Ausführungsbeispiel 2

Bei einer Weiterbildung der Erfindung wird die Flachspule 4 nicht, wie vorgängig beschrieben, nur zur Erfassung der Position des Leadframes, sondern für die geregelte Positionierung des Leadframes benutzt. Die Flachspule 4 ist daher das Messglied eines Regelkreises, der das Transportsystem 3 steuert.

Die Geometrie der Flachspule 4 und die x-Lage der Flachspule 4 sind so gewählt, dass das Ausgangssignal 7 der Flachspule 4 im Regelbereich monoton und somit eindeutig ist. Die Fig. 4 zeigt die Lage des Loches 6 bezüglich der Flachspule 4, sobald das Leadframe seine Sollposition erreicht hat. Die Fig. 5 zeigt das Ausgangssignal der Flachspule 4 in Funktion der x-Lage des Loches 6, wobei mit $x_s$ die Sollposition des Leadframes bezeichnet ist. Im Bereich der Sollposition $x_s$ ist das Ausgangssignal 7 monoton steigend.

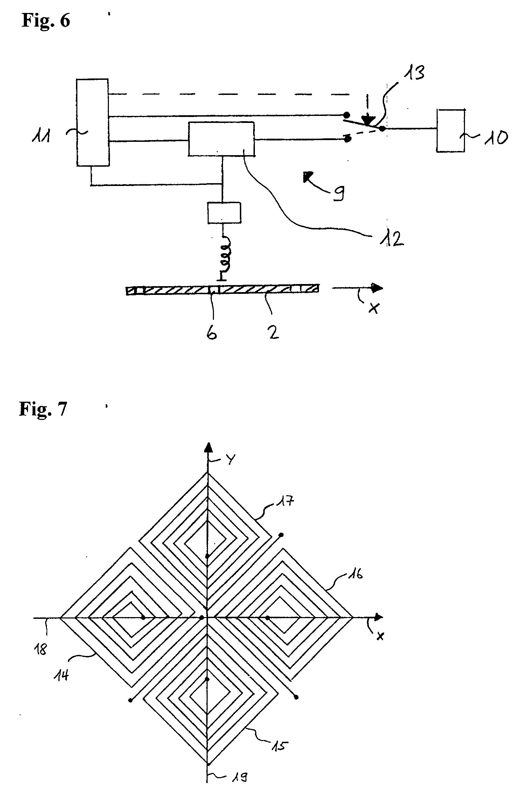

Die Fig. 6 zeigt ein Schema einer Steuereinrichtung 9 für den Antrieb 10 des Transportsystems 3. Die Steuereinrichtung 9 umfasst einen Mikroprozessor 11, einen Regler 12, beispielsweise einen PI-Regler, einen Schalter 13 und den Antrieb 10. Der elektronische Regler 12 liefert an seinem Ausgang eine Gleichspannung, deren Polarität die Transportrichtung des Antriebs 10 angibt und deren Betrag die Transportgeschwindigkeit beinhaltet. Eine relativ kleine Spannung bedeutet, dass der Antrieb 10 langsam transportiert. Mit zunehmender Spannung erhöht sich die Geschwindigkeit des Antriebs 10. Im Betrieb steuert die Steuereinrichtung 9 den Antrieb 10 des Transportsystems 3 wie folgt:

1. Sobald der Halbleiterchip plaziert ist, setzt der Mikroprozessor den Schalter 13 in die in der Fig. 6 mit einer ausgezogenen Linie gezeigte Stellung und beaufschlagt den Antrieb 10 mit einer positiven Spannung, derart, dass der Antrieb das Leadframe in Transportrichtung x beschleunigt und mit vergleichsweise grosser Geschwindigkeit transportiert.

2. Das Ausgangssignal der Flachspule 4 steigt zunächst weiter an, bis das Loch 6 über der Flachspule 4 zentriert ist, und fällt dann wieder ab, bis das Loch 6 ausserhalb des Messbereichs der Flachspule 4 gelangt ist. Während des Transports des Leadframes erfasst der Mikroprozessor 11 das Ausgangssignal der Flachspule 4 und bestimmt dessen maximalen Wert $U_{max}$.

3. Solange sich kein Loch 6 im Messbereich der Flachspule 4 befindet, ist das Ausgangssignal der Flachspule 4 konstant und hat einen minimalen Wert $U_{min}$. Der Mikroprozessor 11 übermittelt nun den Sollwert $U_S$ an den Regler 12.

4. Wenn das nächste Loch in den Messbereich der Flachspule 4 gelangt, steigt das Ausgangssignal der Flachspule 4 wieder an. Sobald der Wert des Ausgangssignals der Flachspule 4 einen vorbestimmten Wert überschreitet, setzt der Mikroprozessor 11 den Schalter 13 in die in der Fig. 6 gestrichelt gezeigte Stellung, so dass nun der Regler 12 die Steuerung des Antriebs 10 übernimmt. Der Regler 12 sorgt dafür, dass der Antrieb 10 stoppt, sobald das Ausgangssignal der Flachspule 4 den Sollwert

$U_S$ erreicht hat.

Die Bestimmung des maximalen Wertes $U_{max}$ des Ausgangssignals der Flachspule 4 während jeder Transportphase ermöglicht es, den induktiven Sensor 1 fortlaufend zu kalibrieren. Im Schritt 3 wird der Sollwert $U_S$ z.B. berechnet zu $U_S = k * U_{max}$, wobei k eine vorbestimmte Konstante ist, die den Sollwert in Funktion des Maximalwerts $U_{max}$ definiert. Die Konstante k wird vor dem Montageprozess in einem Eichvorgang bestimmt und beträgt beispielsweise k=0.9.

Ausführungsbeispiel 3

Dieses Ausführungsbeispiel betrifft einen induktiven Sensor 1, der besonders geeignet ist, das Loch 6 eines metallischen Werkstücks 2 in zwei orthogonalen Richtungen zu positionieren, nämlich in einer Transportrichtung x und einer Transportrichtung y. Der induktive Sensor 1 weist vier Flachspulen 14 bis 17 auf, die, wie in der Fig. 7 gezeigt ist, je paarweise entlang zwei orthogonalen Achsen 18 und 19 eines Fadenkreuzes angeordnet sind. Die Flachspulen 14 bis 17 sind vorzugsweise quadratisch, wobei von jedem Quadrat einer Flachspule eine Diagonale entweder auf der Achse 18 oder der Achse 19 des Fadenkreuzes liegt. Die Achse 18 verläuft parallel zur Transportrichtung x, die Achse 19 verläuft parallel zur Transportrichtung y.

Wenn das Loch 6 in Transportrichtung x unter (oder über) dem induktiven Sensor 1 zentriert ist, dann sind die Ausgangssignale der beiden Flachspulen 14 und 16 gleich gross: Ihre Differenz verschwindet dann. Ebenso sind die Ausgangssignale der beiden Flachspulen 15 und 17 gleich gross, wenn das Loch 6 in Transportrichtung y unter (oder über) dem induktiven Sensor 1 zentriert ist. Der induktive Sensor 1 bildet somit vorteilhaft die Differenz der Ausgangssignale der beiden Flachspulen 14 und 16 und führt sie einem Regler für den Antrieb des Transportsystems in Transportrichtung x zu. Der induktive Sensor 1 bildet weiter die Differenz der Ausgangssignale der beiden Flachspulen 15 und 17 und führt sie einem weiteren Regler für den Antrieb des Transportsystems in Transportrichtung y zu. Der Sollwert der beiden Regler ist im Idealfall Null.

Ausführungsbeispiel 4

Für die Positionsbestimmung oder Positionsregelung des Werkstücks 2 in den zwei orthogonalen Transportrichtungen x und y kann auch ein induktiver Sensor benützt werden, der zwei in voneinander elektrisch isolierten Ebenen übereinander angeordnete rechteckförmige Flachspulen aufweist, die gegeneinander um 90° verdreht sind. Die zu den vorstehend erläuterten Ausführungsbeispielen 1 und 2 gemachten Angaben gelten sinngemäss für die Auslegung und Plazierung eines solchen induktiven Sensors relativ zum Loch des Werkstücks.

Ausführungsbeispiel 5

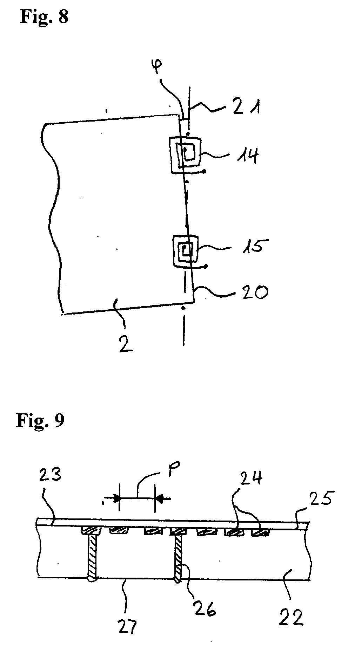

Bei diesem, in der Fig. 8 gezeigten, Ausführungsbeispiel umfasst der induktive Sensor 1 mindestens zwei im Abstand zueinander angeordnete Flachspulen 14 und 15. Die Flachspulen 14 und 15 dienen dazu, die Lage einer Kante 20 des Werkstücks 2 bzw. deren Verdrehung (Winkel $\varphi$) gegenüber der die Flachspulen 14 und 15 verbindenden Achse 21 zu bestimmen.

Jede einzelne Flachspule wird mit einem hochfrequenten Wechselstrom beaufschlagt und erzeugt somit ein hochfrequentes Magnetfeld. Die Frequenz f des Wechselstroms ist so hoch gewählt, dass die Eindringtiefe des Magnetfeldes in das Werkstück deutlich geringer ist als seine Dicke. Die Eindringtiefe $\delta$ ist bestimmt durch den Skineffekt und lässt sich gemäss der Gleichung

$$\delta \approx \sqrt{\frac{1}{\pi \mu \sigma f}} \qquad (1)$$

berechnen, wobei $\mu$ die magnetische Permeabilität und $\sigma$ die elektrische Leitfähigkeit des Werkstücks bezeichnen. Eine hohe Frequenz f drängt sich auch aus elektrotechnischen Gründen auf: Da die Induktivität L der Flachspule in der Regel sehr gering ist und die Flachspule mit einem Kondensator einen Schwingkreis bildet, ergibt sich nur dann ein vernünftiger Wert für die Kapazität C des Kondensators, wenn die Resonanzfrequenz des Schwingkreises sehr gross ist. Das sich infolge der Änderung der Kontur des Werkstücks verändernde Ausgangssignal der Flachspule ist z.B. die Resonanzfrequenz des aus der Flachspule und einem Kondensator gebildeten Schwingkreises, oder die Amplitude der an der Flachspule anliegenden Wechselspannung, oder die Phasenlage der an der Flachspule anliegenden Wechselspannung, oder ein anderes von der Flachspule direkt abgeleitetes Signal. Die Flachspule dient somit einerseits zur Erzeugung eines magnetischen Wechselfeldes als auch zur Erfassung der Wirkung, den die Kontur des Werkstücks auf das Magnetfeld ausübt. Mit anderen Worten: Die wechselnde Kontur des Werkstücks bewirkt eine Impedanzänderung der Flachspule, die für die Positionsmessung ausgenützt wird. Eine für den Betrieb der Flachspule geeignete Schaltung ist z.B. aus der europäischen Patentanmeldung EP 913 857 bekannt, die hiermit explizit eingeschlossen wird.

Die Fig. 9 zeigt den induktiven Sensor 1 im Querschnitt. Der induktive Sensor 1 umfasst ein Trägersubstrat 22, in dessen eine Oberfläche 23 eine spiralförmige Leiterbahn 24 eingebracht wurde, die die Windungen der Flachspule 4 bildet. Das Trägersubstrat 22 besteht vorzugsweise aus Glas oder einem anderen Isolationsmaterial. Die Oberfläche 23 des Trägersubstrats 22 ist fakultativ mit einer Schutzschicht 25 bedeckt. Die beiden Enden der Leiterbahn 24 sind über Durchkontaktierungen 26 von der Rückseite 27 des Trägersubstrates 22 elektrisch mit der Auswerteeinheit verbunden. Der induktive Sensor 1 kann beispielsweise mittels der LIGA Technik hergestellt werden. Dabei wird eine als Trägersubstrat 22 dienende Glasplatte mit Photoresist beschichtet, belichtet und entwickelt. Anschliessend wird an den belichteten Stellen, wo die Oberfläche 23 der Glasplatte freiliegt, in einem Ätzbad eine Vertiefung geätzt. Nach dem Ätzen wird eine Metallschicht aufgedampft und dann der Photoresist entfernt: Die Vertiefung enthält nun bereits die Leiterbahn 24, die zum Schluss aber noch galvanisch verstärkt wird. Anschliessend werden, fakultativ, die Schutzschicht 25 aufgebracht und die Leiterbahn 24 von der Rückseite 27 der Glasplatte her kontaktiert. Mit der LIGA Technologie lassen sich Flachspulen realisieren, bei denen der Pitch p von Windung zu Windung weniger als 10 μm beträgt. Zudem ist ein derartiger induktiver Sensor 1 für den Betrieb bei hohen Temperaturen geeignet.

Auf die Schutzschicht 25 kann eine weitere Flachspule aufgebracht werden, die wiederum mit einer Schutzschicht eingeebnet wird. So lässt sich ein induktiver Sensor mit mehreren Flachspulen herstellen, die übereinander angeordnet sind. Die Flachspulen können elektrisch miteinander verbunden werden oder sie können getrennt betrieben werden.

## Patentansprüche

1. Induktiver Sensor (1), der eine Spule (4; 14; 16) für die Erfassung der Position eines metallischen Werkstücks (2) bezüglich einer ersten Richtung (x) aufweist, und der ein von der Impedanz der Spule (4; 14; 16) abhängiges Ausgangssignal erzeugt, **dadurch gekennzeichnet, dass** die Spule (4; 14; 16) eine Flachspule ist.

2. Induktiver Sensor (1) nach Anspruch 1, **dadurch gekennzeichnet, dass** der Sensor eine weitere Flachspule (15; 17) für die Erfassung der Position eines metallischen Werkstücks (2) bezüglich der ersten Richtung (x) aufweist und dass ein zweites Ausgangsignal gebildet wird, das von der Impedanz der zweiten Flachspule (15; 17) abhängt.

3. Induktiver Sensor (1) nach Anspruch 1, **dadurch gekennzeichnet, dass** der Sensor eine weitere Flachspule (15; 17) für die Erfassung der Position eines metallischen Werkstücks (2) bezüglich der ersten Richtung (x) aufweist und dass als Ausgangssignal des Sensors die Differenz der Ausgangssignale der beiden Flachspulen (14, 15; 16, 17) gebildet wird.

4. Induktiver Sensor (1) nach Anspruch 1, **dadurch gekennzeichnet, dass** der Sensor eine weitere Flachspule (4; 16) aufweist, die der Erfassung der Position des Werkstücks (2) in einer zweiten Richtung (y) dient, und dass ein zweites Ausgangssignal gebildet wird, das von der Impedanz der zweiten Flachspule abhängt.

5. Induktiver Sensor (1) für die Erfassung der Drehlage einer Kante (20) eines metallischen Werkstücks (2), **dadurch gekennzeichnet, dass** der Sensor eine erste Flachspule (14) und eine zweite Flachspule (15) aufweist, dass ein erstes Signal gebildet wird, das von der Impedanz der ersten Flachspule (14) abhängt, dass ein zweites Signal gebildet wird, das von der Impedanz der zweiten Flachspule (15) abhängt, und dass aus den beiden Signalen ein Ausgangssignal des Sensors gebildet wird, das ein Mass für die Drehlage der Kante (20) des Werkstücks (2) bezüglich einer vorbestimmten Achse (21) ist.

6. Induktiver Sensor (1) nach einem der Ansprüche 1 bis 5, **dadurch gekennzeichnet, dass** die erste Flachspule rechteckförmig gewickelte Windungen aufweist.

7. Transportsystem, mit einem Antrieb (10) für den Transport des Werkstücks (2) in einer Transportrichtung und mit einem induktiven Sensor (1) nach einem der Ansprüche 1 bis 6, **dadurch gekennzeichnet, dass** ein Regler (12) vorhanden ist, der ein Signal für die Steuerung des Antriebs (10) erzeugt, und dass das Ausgangssignal (7) des induktiven Sensors (1) dem Regler (12) zugeführt wird.

**Fig. 1**

**Fig. 2**

**Fig. 3**

**Fig. 4**

**Fig. 5**

**Fig. 6**

**Fig. 7**

**Fig. 8**

**Fig. 9**

**Europäisches Patentamt**

# EUROPÄISCHER RECHERCHENBERICHT

Nummer der Anmeldung

EP 01 20 2920

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | DE 200 11 223 U (KINDLER, U.) 9. November 2000 (2000-11-09) * Seite 14 - Seite 19 * | 1-3,6 | G01D5/20 G01B7/00 |
| Y | US 4 816 759 A (AMES GREGORY H ET AL) 28. März 1989 (1989-03-28) * Ansprüche 1-10 * | 1-3,6 | |
| X | US 4 658 153 A (BROSH AMNON ET AL) 14. April 1987 (1987-04-14) * Spalte 3 - Spalte 5 * | 1 | |
| A | EP 1 037 017 A (GOTO ATSUTOSHI) 20. September 2000 (2000-09-20) * Ansprüche 1-34 * | 1 | |
| A | DE 197 51 853 A (HEIDENHAIN GMBH DR JOHANNES) 4. Juni 1998 (1998-06-04) * Spalte 3 - Spalte 6 * | 1-7 | |
| A | DE 43 11 973 A (PEPPERL & FUCHS) 13. Februar 1997 (1997-02-13) * Seite 3 - Seite 6 * | 1-7 | RECHERCHIERTE SACHGEBIETE (Int.Cl.7) G01B G01D |
| A | DE 42 13 866 A (PAPST MOTOREN GMBH & CO KG) 29. Oktober 1992 (1992-10-29) * Spalte 2 - Spalte 7 * | 1-7 | |
| A | US 4 593 245 A (VIERTL JOHN R M ET AL) 3. Juni 1986 (1986-06-03) * Spalte 4 - Spalte 7 * | 1-7 | |
| A | US 6 124 708 A (DAMES ANDREW N) 26. September 2000 (2000-09-26) * Spalte 10 - Spalte 13 * | 1-7 | |

-/--

Der vorliegende Recherchenbericht wurde für alle Patentansprüche erstellt

| Recherchenort | Abschlußdatum der Recherche | Prüfer |
|---|---|---|
| BERLIN | 14. Dezember 2001 | Dietrich, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**Europäisches Patentamt**

# EUROPÄISCHER RECHERCHENBERICHT

Nummer der Anmeldung

EP 01 20 2920

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | PATENT ABSTRACTS OF JAPAN vol. 017, no. 210 (P-1526), 23. April 1993 (1993-04-23) & JP 04 348406 A (KAWASAKI HEAVY IND LTD), 3. Dezember 1992 (1992-12-03) * Zusammenfassung * | 1 | |
| | | | **RECHERCHIERTE SACHGEBIETE (Int.Cl.7)** |

Der vorliegende Recherchenbericht wurde für alle Patentansprüche erstellt

| Recherchenort | Abschlußdatum der Recherche | Prüfer |
|---|---|---|
| BERLIN | 14. Dezember 2001 | Dietrich, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 01 20 2920

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-12-2001

| Im Recherchenbericht angeführtes Patentdokument | | Datum der Veröffentlichung | Mitglied(er) der Patentfamilie | | Datum der Veröffentlichung |
|---|---|---|---|---|---|
| DE 20011223 | U | 05-10-2000 | DE | 20011223 U1 | 05-10-2000 |
| US 4816759 | A | 28-03-1989 | KEINE | | |
| US 4658153 | A | 14-04-1987 | KEINE | | |
| EP 1037017 | A | 20-09-2000 | EP | 1037017 A1 | 20-09-2000 |
| | | | JP | 2001141409 A | 25-05-2001 |
| | | | JP | 2001141410 A | 25-05-2001 |
| | | | JP | 2001235307 A | 31-08-2001 |
| | | | JP | 2001235377 A | 31-08-2001 |
| DE 19751853 | A | 04-06-1998 | DE | 19751853 A1 | 04-06-1998 |
| | | | EP | 0845659 A2 | 03-06-1998 |
| | | | JP | 10213407 A | 11-08-1998 |
| | | | US | 6111402 A | 29-08-2000 |
| DE 4311973 | A | 13-02-1997 | DE | 4311973 A1 | 13-02-1997 |
| DE 4213866 | A | 29-10-1992 | DE | 9105145 U1 | 27-08-1992 |
| | | | DE | 4213866 A1 | 29-10-1992 |
| US 4593245 | A | 03-06-1986 | DK | 550784 A | 13-06-1985 |
| | | | EP | 0147630 A1 | 10-07-1985 |
| | | | JP | 60142246 A | 27-07-1985 |
| | | | US | 4706020 A | 10-11-1987 |
| US 6124708 | A | 26-09-2000 | EP | 0862727 A1 | 09-09-1998 |
| | | | WO | 9719323 A1 | 29-05-1997 |
| | | | JP | 2001520743 T | 30-10-2001 |
| JP 04348406 | A | 03-12-1992 | JP | 2046810 C | 25-04-1996 |
| | | | JP | 7081808 B | 06-09-1995 |
| | | | DE | 69219498 D1 | 12-06-1997 |
| | | | DE | 69219498 T2 | 18-12-1997 |
| | | | EP | 0499876 A2 | 26-08-1992 |
| | | | US | 5221896 A | 22-06-1993 |

EPO FORM P0461

Für nähere Einzelheiten zu diesem Anhang : siehe Amtsblatt des Europäischen Patentamts, Nr. 12/82